# EUROPÄISCHE PATENTSCHRIFT

(11) **EP 0 868 245 B1**
(45) Veröffentlichungstag und Bekanntmachung des Hinweises auf die Patenterteilung: **02.10.2002**
(21) Anmeldenummer: 96914154.8
(22) Anmeldetag: 30.04.1996
(51) Int. Cl.: B23D 31/00, C21D 1/09

(54) **VERFAHREN ZUR AUSBILDUNG EINER ANRISSSTELLE ZUM BRUCHTRENNEN EINES BAUTEILS, INSBESONDERE PLEUEL FÜR BRENNKRAFTMASCHINEN**
METHOD FOR FORMING A CRACKING SITE FOR FRACTURE SEPARATION OF A COMPONENT, IN PARTICULAR A CONNECTING ROD FOR INTERNAL COMBUSTION ENGINES
PROCEDE DE FORMATION D'UNE ZONE D'AMORCE DE RUPTURE POUR LA SEPARATION PAR CASSURE D'UN COMPOSANT, EN PARTICULIER D'UNE BIELLE POUR MOTEUR A COMBUSTION INTERNE

(30) Priorität: 19.12.1995 DE 19547389
(43) Veröffentlichungstag der Anmeldung: 07.10.1998
(60) Teilanmeldung: 00710040.7
(73) Patentinhaber: Bayerische Motoren Werke Aktiengesellschaft, 80788 München (DE)
(72) Erfinder: LUCHNER, Clemens, D-85598 Baldham (DE); PÖLLATH, Helmut, D-82223 Eichenau (DE); HOCHSTEINER, Helmut, . (AT)
(74) Vertreter: Bücken, Helmut
(86) Internationale Anmeldenummer: EP9601797
(87) Internationale Veröffentlichungsnummer: WO97022430

(56) Entgegenhaltungen:
- DE-A- 3 425 829
- DE-U- 29 519 126

## Beschreibung

Die Erfindung bezieht sich auf ein Verfahren der im Oberbegriff des Patentanspruches 1 beschriebenen Art, wie es aus der DE 30 10 239 A1 bekannt ist.

Gegenstand dieses Dokumentes ist ein Verfahren zum Erzeugen von Bruchtrennkerben für ein nachfolgendes Bruchtrennen in Einzelstücke eines keramischen Trägers von elektronischen Schaltungen. Gemäß einem beanspruchten Vorschlag dient zur Herstellung der Bruchtrennkerben ein impulsartig arbeitender Laser zum Einbrennen konischer, sacklochartiger Vertiefungen in die Trägeroberfläche, wobei die Vorschubgeschwindigkeit des Trägers relativ zur Laser-Impulsfolge derart geregelt ist, daß die linienartig benachbarten Vertiefungen vorzugsweise an der Trägeroberfläche sich berührende Kreise bilden.

In der Art dieses Verfahrens in einem Keramikteil ausgebildete, linienartige Bruchtrennkerben mit durch Laser gebohrten, trichterförmigen Sacklochbohrungen sind beispielsweise in Figur 2 der US 5 626 777 abschnittsweise anhand einer Bruchtrennfläche gezeigt. Derartige Sacklochbohrungen können gemäß Spalte 6 der US 5 626 777 u.a. auch in einem Metallteil erzeugt sein.

Demgegenüber ist aus der US 5 208 979 ein Verfahren zur Ausbildung von Bruchtrennkerben in der Bruchtrennebene eines durch Bruchtrennen teilbaren großen Lagerauges eines Pleuels aus einem Eisenwerkstoff bekannt. Zur Erzielung von im jeweiligen Kerbgrund im wesentlichen messerscharfen Bruchtrennkerben werden diese mit einem längs- und quer zur Kerbe bewegten Laser an entsprechender Bauteilstelle von deren Oberfläche aus mit einem V-förmigen Querschnitt ausgebildet, wobei das Tiefenmaß der Bruchtrennkerbe gegenüber ihrer Breite an der Bauteiloberfläche größer gewählt ist. Nachteilig hierbei ist, daß das gesamte Volumen jeder V-förmigen Bruchtrennkerbe mittels des Laser auszubringen ist.

Weiter sind für die Qualität der Bruchtrennflächen insbesondere in Eisenwerkstoffen von erheblicher Bedeutung die zu Beginn eines Bruchtrennvorganges im Grunde einer Bruchtrennkerbe sich zunächst bildenden, haarfeinen Starterrisse, die aufgrund des inhomogenen Bauteil-Gefüges über der Länge der Bruchtrennkerbe nicht gezielt ausgelöst werden können.

Aus der nachveröffentlichten, u.a. auf der DE-U 295 19 126 gründenden PCT-Anmeldung WO 96/24458 ist zur Ausbildung von Bruchtrennkerben in einem Pleuel aus einem Eisenwerkstoff zur Vermeidung eines großvolumigen Materialabtrages mittels Laser entsprechend der vorgenannten US 5 208 979 vorgesehen, anstelle von V-förmigen Kerben die Bruchtrennkerben nach Art des gattungsgemäßen Verfahrens der DE 30 10 239 A1 mittels Laser durch linienartig benachbart angeordnete, sacklochartige Vertiefungen auszubilden, die als Kerbabschnitte bezeichnet sind.

Weiter ist vorgesehen, in den zwischen den Kerbabschnitten verbliebenen Stegen eine durchgehende Gefügeumwandlung auf alle Fälle zu vermeiden, um diese Anrißstellen nach einer Bruchtrennung noch spanabhebend beseitigen zu können. Hierfür ist der zum Bohren der als fingerförmige oder als zylindrische Sacklöcher gestalteten Kerbabschnitte verwendete Laser dabei in seiner Leistung soweit reduziert, daß die mit dem Wärmeeintrag verbundene Gefügeumwandlung (Martensit) in den Begrenzungen der Kerbabschnitte äußerst geringfügig ist.

Diese vorgenannte Zielsetzung ist aus der auf ein 'Verfahren zum Herstellen eines Loches in einem Werkstück mit Hilfe von Laserstrahlung" gerichteten deutschen Offenlegungsschrift DE 28 14 044 A1 bekannt, wobei sich dieses Verfahren mit Hilfe von Laserstrahlung zum Bohren von Löchern darauf bezieht, daß die lasergebohrten Löcher frei von umgeschmolzenen Schichten und von Wärmeeinflußzonen sind.

Ausgangspunkt für das in der vorgenannten DE 28 14 044 A1 beanspruchte Verfahren zum Laserbohren von Löchern in metallenen Werkstoffen ist der Umstand, daß beim Ausstoßen des geschmolzenen Materials aus dem Werkstück Teile der Schmelze an der Wand des Loches erstarren und eine umgeschmolzene Schicht erzeugen. Das Materialgefüge der umgeschmolzenen Schicht unterscheidet sich von dem des Grundmaterials, es hat gewöhnlich eine niedrigere Duktilität und führt zu Schrumpfrissen, die sich gegebenenfalls in das Grundmaterial ausbreiten können. In Figur 5 dieses Dokumentes ist eine derartige Umschmelzschicht mit quer zur Bohrung gerichteten Schrumpfrissen an der Wand eines trichterförmigen, in einem Nickel-Werkstoff lasergebohrten Loches gezeigt.

Im Sinne der vorbeschriebenen Umschmelzschicht sind auch beim Ausbrennen der V-förmigen Kerben im Pleuel gemäß der weiter vorne bereits zitierten US 5 208 979 an den Kerbwänden umgeschmolzene Schichten mit ungeordnet ausgebildeten Schrumpfrissen zu erwarten.

Ausgehend von der Tatsache, daß sowohl beim Bruchtrennen des keramischen Trägers der gattungsbildenden DE 30 10 239 A1 durch Abknicken entlang der linienartig benachbarten Vertiefungen als auch beim Bruchtrennen des Pleuels der nachveröffentlichten WO 96/24458 durch elastische bis plastische Verformung der Lagerbohrung der Lageranordnung jeweils aus einem Biegevorgang resultierende hohe Zugspannungen in den jeweiligen Stegen zwischen den jeweiligen Vertiefungen zum Auslösen des jeweiligen Bruches führen, ist es Ziel der vorliegenden Erfindung, unter Verwendung der im vorbeschriebenen Stand der Technik bekannten Mittel ein Verfahren zur Ausbildung einer Anrißstelle zum Bruchtrennen eines Bauteils zu verbessern.

Der Erfindung liegt daher die Aufgabe zugrunde, bei einem mittels Bruchtrennen teilbaren Bauteil aus duktilem Metall die in einer Bruchtrennebene zur gezielten Bruchauslösung vorgesehenen Anrißstellen derart auszubilden, daß über die Länge der jeweiligen Anrißstelle gezielt verteilte Starterrisse erreicht sind.

Diese Aufgabe ist mit dem Patentanspruch 1 gelöst. Mit der nach dem erfindungsgemäßen Verfahren gestalteten Anrißstelle ergibt sich gegenüber einer herkömmlich durchgehenden Kerbtrennlinie oder gegenüber in Reihe angeordneter, werkstoffweicher Kerbabschnitte in vorteilhafter Weise eine Anzahl von querschnittsschwachen, glashart versprödeten Stegen als kurze Linienabschnitte, deren Länge in Summe gegenüber der durchgehenden Kerbtrennlinie oder einer Vielzahl von Kerbabschnitten wesentlich kürzer ist, so daß zusätzlich zu den Härterissen durch die auf geringe Querschnitte verteilte Bruchtrennkraft in den durch Versprödung rißanfälligen Stegen gezielt über die Anrißstelle verteilte Starterrisse ausgelöst sind. Mit der Wahl der Stegquerschnitte in Verbindung mit dem jeweiligen Versprödungs-Verfahren kann die gleichzeitige Auslösung von Starterrissen über die gesamte erfindungsgemäße Anrißstelle in vorteilhafter Weise erzielt und damit ein einziger, punktueller Starterriß vermieden werden. Starterrisse per se sind in sintergeschmiedeten Bauteilen im übrigen aus der DE-C 38 06 236 bekannt.

Die mit dem erfindungsgemäßen Verfahren vorteilhaft erzielte Bruchkerbwirkung beruht somit nicht wie beim Stand der Technik auf in Reihe angeordneter, lasergebohrter Sacklöcher, sondern auf den mit den Starterrissen bzw. Härterissen in den Stegen erzielten Bruchtrennkerben von höchster Empfindlichkeit.

In Ausgestaltung der Erfindung ist diese noch dadurch gesteigert, daß die Vertiefungen im jeweiligen Grund zwischen den Stegen zumindest im Bereich der Bruchtrennebene zusätzlich versprödet sind.

Damit ergibt sich der Vorteil, daß die im jeweils schwächsten Querschnitt der Stege sich ausbildenden Starterrisse in ihrem Fortgang durch den Steg bei Erreichen des jeweiligen Grundes zwischen den Vertiefungen sich zu einer durchgehenden Bruchfront vereinigen.

Vorteilhaft ist die erfindungsgemäße Anrißstelle bei einem Bauteil aus einem Eisenwerkstoff mit einem Kohlenstoffgehalt C ≈ 0,55 bis 0,85 % zu verwirklichen, da die Versprödung von Stegen und/oder Vertiefungen mittels temperaturabhängiger Gefügeumwandlungen erzielt ist. Besonders vorteilhaft ist hierbei als Gefugeumwandlung eine Härtung mit Eigenabschreckung.

Diese Maßnahme ist besonders vorteilhaft dadurch umgesetzt, daß bei dem erfindungsgemäßen Verfahren auf der bekannten Basis der mittels Aufschmelzen des Bauteil-Werkstoffes durch Strahlungsenergie erzeugten Vertiefungen die Strahlungsenergie mittels eines Lasers derart eingebracht und das erschmolzene Material mittels eines Luft- oder Sauerstoffstrahles ausgeblasen und/oder verbrannt wird, daß zumindest in den freien, bauteiloberflächennahen Endabschnitten der Stege unter einem spitzen Winkel sich überlappende, glashart versprödete Zonen von Gefügeumwandlungen zur Auslösung erster Starterrisse erzeugt werden. Zur Vermeidung von Nacharbeit im Bereich der Anrißstelle sind die Stege zwischen benachbarten Vertiefungen gegenüber der Bauteiloberfläche tiefer bzw. vertieft angeordnet, wozu vorzugsweise der Luft- oder Sauerstoffstrahl zusätzlich dient.

Die mit dem erfindungsgemäßen Verfahren in den Stegen erzeugten überlappenden, versprödeten Zonen sind in besonders vorteilhaft einfacher Weise dadurch erzielt, daß die Vertiefungen trichterförmig ausgebildet werden mittels einer Lasereinrichtung mit einer über den Querschnitt des gepulsten Laserstrahls nach Gauß'scher Verteilungskurve verteilter Strahlenergie.

Durch diesen geschickten Einsatz des Lasers zur Ausbildung der Vertiefungen wird erreicht, daß die durch Eigenabschreckung allseitig in den Vertiefungen gebildeten, in der Regel glasharten Härteschichten die Stege zumindest in den kleinsten Querschnitten durchsetzen. Erreicht ist damit ferner eine bis auf den Grund der Anrißstelle reichende, rißempfindliche Ausbildung, die je nach Härtevorgang bereits Härterisse als Starterrisse aufweisen kann.

Die vorzugsweise mit einem gepulsten Laser gebildeten Vertiefungen weisen bei jeweils beliebigem Querschnitt in Richtung ihrer Anordnung nebeneinander an der Bauteiloberfläche eine Breite bis ca. 0,4 mm und eine Tiefe zwischen ca. 0,4 bis 0,9 mm auf. Der Vorteil dieser relativ schmalen Anrißstellen ist, daß diese z.B. nach der abschließenden Feinstbearbeitung einer Lagerbohrung bei zusätzlicher Verwendung von Lagerschalen oder Wälzlagern im Bauteil verbleiben können. Unterstützend hierfür ist nach einem weiteren Merkmal des erfindungsgemäßen Verfahrens vorgesehen, daß die aus der Verschneidung benachbarter, trichterförmiger Vertiefungen erzeugten, versprödeten Steg-Spitzen gegenüber der Bauteiloberfläche in ihrem jeweiligen vertieften Abstand belassen werden.

Im Rahmen der Erfindung können auch auf eine andere Art gefertigte Stege und Vertiefungen durch einen Elektronenstrahl für eine gesteigerte Rißempflichkeit gehärtet werden, wie dies per se aus der US 3 818 577 bekannt ist.

Bei einer Ausgestaltung eines Bauteils mit in einer Lagerbohrung diametral angeordneten Anrißstellen findet das erfindungsgemäße Verfahren bevorzugt Anwendung dadurch, daß die Anrißstellen vor der abschließenden Feinstbearbeitung der jeweiligen Lagerbohrung in einem als Pleuel oder Maschinenlager gestalteten Bauteil angeordnet sind, und daß der jeweilige Lagerdeckel zwischen Schraubenpfeifen derart biegeelastisch gestaltet ist, daß mit einem um 0,05 bis 0,15 mm im Durchmesser gegenüber der vorbearbeiteten Lagerbohrung kleiner gewählten Brechdorn eine der Erzeugung von Starterrissen in den Stegen und/oder Vertiefungen dienende, elastische Verformung bewirkt ist. Der Vorteil dieser Maßnahme ist eine zu Beginn der Bruchbelastung hohe Zugspannung in den versprödeten Stegen zum Auslösen der für die Bruchflächenqualität bedeutsamen Starterrisse.

Die Erfindung ist anhand eines in der Zeichnung dargestellten Ausführungsbeispiels beschrieben. Es zeigt
- Figur 1: in perspektivischer Ansicht eine Anrißstelle im großen Lagerauge eines Pleuels für eine Hubkolbenmaschine,
- Figur 2: eine ausschnittsweise vergrößerte Schrägaufsicht der Anrißstelle,
- Figur 3: die Anrißstelle ausschnittsweise im Längsschnitt, vergrößert

Ein abschnittsweise dargestelltes Pleuel 1 für eine nicht gezeigte Hubkolbenmaschine ist aus einem Stahl gefertigt, dessen Kohlenstoffgehalt zwischen C≈ 0,55 bis 0,85 % gewählt ist. Das Pleuel 1 umfaßt an seinem Schaft 2 ein großes Lagerauge 3 mit Schraubenpfeifen 4. Das Lagerauge 3 ist durch einen Lagerdeckel 5 zweigeteilt.

Die Zweiteilung des Lagerauges 3 erfolgt mittels Bruchtrennen, wofür in einer Bruchtrennebene 6 zur gezielten Bruchauslösung in der Lagerbohrung 7 diametral angeordnete Anrißstellen 8 (nur eine gezeigt) nach dem erfindungsgemäßen Verfahren ausgebildet werden.

Vorbekannter Ausgangspunkt der Ausbildung jeder Anriß-Stelle 8 zur gezielten Bruchauslösung ist, daß diese entlang einer Seite der Bruchtrennebene 6 durch von der Bauteiloberfläche 9 aus angeordnete und durch Stege 10 voneinander getrennte Vertiefungen 11 erzeugt ist. Zur Erzeugung erster, für eine qualitative Bruchtrennung bedeutsamer Starterrisse werden die Stege 10 nach dem erfindungsgemäßen Verfahren zumindest in ihrem freien, bauteiloberflächennahen Endabschnitten mittels Gefügeumwandlungen (Martensit) über ihren Querschnitt durchgängig versprödet. Diese Versprödung kann durch ein bekanntes Härten oder durch eine Wasserstoff- oder Stickstoff-Versprödung erzielt sein.

Bevorzugt beim zumindest bereichsweisen Härten der Stege 10 und/oder der Vertiefungen 11 sind solche Verfahren mit Eigenabschreckung durch Wärmeabfuhr in das umgebende Bauteil. Denkbar hierfür ist bei mittels mechanischer Bearbeitung und/oder durch Gießen erzeugten Vertiefungen 11 mit zwischengeordneten Stegen 10 auch der Einsatz eines bekannten Elektronenstrahlverfahrens. Die erfindungsgemäß zumindest abschnittsweise durchgängig versprödeten Stege 10 sind besonders rißanfällig, was vorteilhafterweise zur Ausbildung haarfeiner Starterrisse genutzt wird. Diese erfordern beim Bruchtrennen einen reduzierten Kraftaufwand und ergeben trotzdem eine hohe Bruchtrennflächen-Qualität.

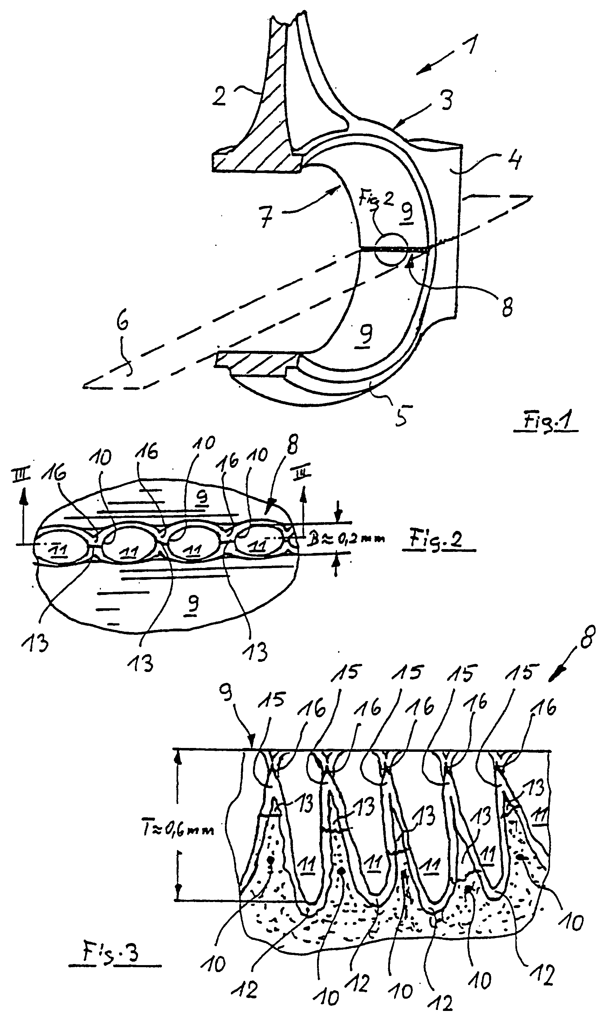

Ausgehend von den bekannten Maßnahmen, nach denen die Vertiefungen 11 mittels Aufschmelzen/Verdampfen des Bauteil-Werkstoffes durch Strahlungsenergie erzeugt werden und die Begrenzungen der Vertiefungen 11 durch das Aufschmelzen erzeugte Gefüge-Umwandlungen 12 aufweisen, sind günstige Voraussetzungen für haarfeine Starterrisse in einem Stahl-Pleuel 1 mit inhomogenen Gefüge gemäß dem weiteren erfindungsgemäßen Verfahren dadurch erreicht, daß die Strahlungsenergie mittels eines Lasers derart eingebracht und das erschmolzene Material mittels eines Luft- oder Sauerstoffstrahles ausgeblasen und/oder verbrannt wird, daß zumindest in den freien, bauteiloberflächennahen Endabschnitten der Stege 10 unter einem spitzen Winkel sich überlappende (versprödete) Zonen 15 von Gefügeumwandlungen 12 zur Auslösung erster Starterrisse 13 erzeugt werden, wobei der Luft- oder Sauerstoffstrahl zusätzlich einer gegenüber der Bauteiloberfläche 9 vertieften Ausbildung der Stege 10 dient. Die im Anschluß an das Ausblasen des erschmolzenen Materials erfolgende Eigenabschreckung ergibt in den Vertiefungen 11 - Figuren 2 und 3 - allseitig gebildete Härteschichten 12, die die Stege 10 zumindest in den kleinsten Querschnitten im Bereich ihrer Spitzen 16 durchsetzen und somit zumindest diese Querschnitte durchgängig versprödet sind.

Sich überlappende Zonen 15 von Gefügeumwandlungen 12 sind besonders vorteilhaft einfach dadurch erreicht, daß die Vertiefungen 11 trichterförmig ausgebildet werden mittels einer Lasereinrichtung mit einer über den Querschnitt des gepulsten Laserstrahles nach Gauß'scher Verteilungskurve verteilter Strahlenergie.

Bevorzugt findet zur Ausbildung der trichterförmigen Vertiefungen 11 der Anrißstelle 8 ein gepulster Festkörper-Laser Verwendung, womit in Verbindung mit kleinsten Abmessungen der Vertiefungen 11 von jeweils einer Breite B ≈ 0,2 mm und einer Tiefe T ≈ 0,6 mm ein derart kleiner, lokal begrenzter Wärmeeintrag in das Bauteil - Pleuel 1 - mit gesteuert erzeugten Härteschichten 12 erfolgt, daß das Bauteil bzw. das Pleuel 1 bis auf ein Übermaß für die Feinstbearbeitung der Lagerbohrung 7 bereits fertiggestellt sein kann. Hierzu trägt auch ferner erfindungsgemäß bei, daß die aus der Verschneidung benachbarter, trichterförmiger Vertiefung 11 erzeugten, versprödeten Steg-Spitzen 16 gegenüber der Bauteil-Oberfläche 9 in ihren jeweiligen vertieften Abstand belassen werden. Mit den unterschiedlich nah an die Bauteiloberfläche 9 heranreichenden Steg-Spitzen 16 ergibt sich der weitere Vorteil, daß die besonders hohen Steg-Spitzen 16 aufgrund ihrer durchgängigen Versprödung besonders kerbempfindlich sind und somit bei einer Bruchbelastung als erste brechen und in der Folge die niedrigeren Steg-Spitzen 16 zur Rißbildung veranlassen.

Aufgrund der vorbeschriebenen, in Umfangsrichtung der Lagerbohrung 7 geringen Breite von ca. 0,2 mm jeder Anrißstelle 8 können diese bei Einsatz eines Wälzlagers oder von Lagerschalen (jeweils nicht gezeigt) in der Lagerbohrung 7 verbleiben, womit eine spanabhebende Bearbeitung zur Beseitigung der jeweiligen Anrißstelle 8 vorteilhaft entfällt.

Es sei darauf hingewiesen, daß das Wesen der Erfindung nicht in einer hohen Anzahl von Vertiefungen 11 je Anrißstelle 8 zu sehen ist, sondern in einer je Anrißstelle 8 ausreichenden Anzahl gehärteter bzw. zumindest abschnittsweise versprödeter Stege 10 als Starterriß-Bildner. Die Anzahl der Stege 10 je Anrißstelle 8 bestimmt sich damit auch durch im Querschnitt länglich gestaltete Vertiefungen 11. Gegenüber einer herkömmlich durchgehenden Kerbtrennlinie (= US 5 208 979) oder einer Vielzahl von Kerbabschnitten (= DE-U 295 19 126) ergibt sich demgegenüber eine Anzahl kurzer, aus querschnittsschwachen, versprödeten Stegen gebildeter Linienabschnitte, deren Länge in Summe gegenüber der oben genannten Kerbtrennlinie bzw. den Kerbabschnitten wesentlich kürzer und bruchempfindlicher ist, so daß die eingeleitete Bruchtrennkraft sich auf viele durch Versprödung rißanfällige Stege verteilt mit dem Vorteil, der gezielten Auslösung vieler Starterrisse.

Aufgrund der bevorzugt lasergebildeten Vertiefungen 11 mit allseitigen Härteschichten 12 setzen sich die Starterrisse 13 bis in den Grund der jeweiligen Vertiefungen 11 fort, so daß zu Anfang des Bruchtrennens über die gesamte Länge der Anrißstelle 8 verteilt Starterrisse 13 auftreten, die beim Fortgang durch die Stege 10 bis in den jeweiligen Grund zwischen den Vertiefungen 11 sich zu einer gemeinsamen Rißfront im weiteren Fortgang des Bruchtrennens vereinigen. Mit den über die gesamte Länge der Anrißstelle 8 erzeugten, vielen Starterrissen 13 ist in vorteilhafter Weise ein vergleichmäßigtes Bruchtrennen in jedem Bauteilquerschnitt mit hochwertigen Bruchtrennflächen erzielt.

Mit den erfindungsgemäß gestalteten Anrißstellen 8 mit zumindest bereichsweise glashart versprödeten Stegen 10 ergibt sich bei deren üblicher, nicht V-förmiger Anordnung bereits in vorteilhafter Weise gegenüber den herkömmlichen Bruchtrennkerben eine erhebliche Reduzierung der Bruchtrennkraft um mindestens 50 %. Dies läßt sich für die Fertigung eines Stahl-Pleuels 1 mit V-förmiger Steg-Anordnung dahingehend nutzen, daß dieses bis auf die letzte Feinstbearbeitung der Lagerbohrung 7 gefertigt ist, einschließlich mindestens einer Haltenut für Lagerschalen. Zusätzlich kann der Lagerdeckel 5 zwischen den Schraubenpfeifen 4 derart biegeelastisch gestaltet sein, daß mit einem um 0,05 bis 0,15 mm im Durchmesser gegenüber der vorbearbeiteten Lagerbohrung 7 kleiner gewählten, nicht gezeigten Brechdom eine der Erzeugung von Starterrissen 13 in den Stegen 10 und den Vertiefungen 11 dienende elastische Verformung bewirkt wird. Eine eventuell aus diesem Bruchtrennen bleibende Oval-Verformung liegt innerhalb des für die Feinstbearbeitung vorgesehenen Aufmaßes.

Mit der Erfindung ist ein gewichtsreduziertes und vorteilhaft zu fertigendes Stahl-Pleuel 1 für Hubkolbenmaschinen erzielt.

Weiter findet die Erfindung auch vorteilhaft Anwendung bei in einer Lagerbohrung zentral-radial eingeleiteter Bruchtrennkraft, wie dies per se Gegenstand der P 44 42 062 ist.

## Patentansprüche

1. Verfahren zur Ausbildung einer Anrißstelle zum Bruchtrennen eines Bauteiles, insbesondere Pleuel für Brennkraftmaschinen,
- bei dem zur gezielten Bruchauslösung eine Anrißstelle (8) mittels gepulster Strahlenergie, z.B. Elekronenstrahl, oder Laserstrahl, erzeugt wird, wobei
- mittels einer relativ zu jeweiligen Strahleinwirkung gewählten Vorschubbewegung zumindest abschnittsweise entlang einer Seite der Bruchtrennebene (6) von der Bauteil-Oberfläche (9) aus durch Stege (10) voneinander getrennte, linienartig hintereinander angeordnete, trichterförmig sacklochartige Vertiefungen (11) durch Schmelzen, Verdampfen und/oder Ausblasen erzeugt werden, wobei
- die trichterförmig sachlochartigen Vertiefungen (11) bauteiloberflächennah aneinander grenzen,
**dadurch gekennzeichnet,**
- **daß** das Bauteil aus einem Kohlenstoffstahl mit einem Kohlenstoffgehalt C ≈ 0,5 bis 0,85 % als duktilem Material gebildet wird, und
- **daß** an den freien, bauteiloberflächennahen Endabschnitten querschnittsschwach ausgebildeter Stege (10) durch Verschneidung benachbarter trichterförmiger Vertiefungen (11) Steg-Spitzen (16) mit unter einem spitzen Winkel sich überlappenden Zonen (15) gebildet werden, die
- durch temperaturabhängige Gefügeumwandlung zu Martensit (12) zumindest über den Spitzen-Querschnitt durchgängig durch Eigenabschreckung glashart versprödet werden zur Ausbildung erster, das Bruchtrennen einleitender Starterrisse (13), wobei
- die glashart versprödeten Steg-Spitzen (16) gegenüber der Bauteiloberfläche (9) jeweils vertieft belassen werden.

2. Verfahren nach Anspruch 1, **dadurch gekennzeichnet, daß** die Vertiefungen (11) im jeweiligen Grund zwischen den Stegen (10) zumindest im Bereich der Bruchtrennebene (6) zusätzlich versprödet werden.

3. Verfahren nach Anspruch 1 und 2, **dadurch gekennzeichnet, daß** die Versprödung von Stegen (10) und/oder Vertiefungen (11) mittels Einlagerungen in das jeweilige Gefüge aus einem Gasstrom (Wasserstoff- oder Stickstoff-Versprödung) erzielt wird.

4. Verfahren nach einem der Ansprüche 1 bis 3, **dadurch gekennzeichnet,**
- **daß** die Vertiefungen (11) durch einen Laser erzeugt werden mittels einer Lasereinrichtung mit einer über den Querschnitt des gepulsten Laserstrahles nach Gauß'scher Verteilungskurve verteilter Strahlenergie, wobei
- gegebenenfalls die versprödeten Steg-Spitzen (16) gegenüber der Bauteil-Oberfläche (9) mittels eines dem Ausblasen und/oder Verbrennen des in den Vertiefungen (11) erschmolzenen Materials dienenden Luft- oder Sauerstoffstrahls vertieft ausgebildet werden.

5. Verfahren nach einem der Ansprüche 1 bis 4, **dadurch gekennzeichnet, daß** die Vertiefungen (11) in Richtung ihrer Reihungs-Anordnung von jeweils beliebigem Querschnitt eine Breite von ca. 0,4 mm und eine Tiefe zwischen ca. 0,4 bis 0,9 mm aufweisen.

6. Verfahren zur Herstellung eines Bauteils nach einem oder mehreren der Ansprüche 1 bis 5,
- mit in einer Lagerbohrung (7) diametral angeordneten Anrißstellen (8),
**dadurch gekennzeichnet,**
- **daß** die Anrißstellen (8) vor der abschließenden Feinstbearbeitung der jeweiligen Lagerbohrung (7) in einem als Pleuel (1) oder Maschinenlager gestalteten Bauteil angeordnet sind, und
- **daß** der jeweilige Lagerdeckel (5) zwischen Schraubenpfeifen (4) derart biegeelastisch gestaltet ist, daß
- mit einem um 0,05 bis 0,15 mm im Durchmesser gegenüber der vorbearbeiteten Lagerbohrung (7) kleiner gewählten Brechdorn eine der Erzeugung von Starterrissen in den Stegen (10) und/oder Vertiefungen (11) dienende elastische Verformung bewirkt ist.

## Claims

1. A method of forming an incipient crack for breaking apart a component, especially a connecting rod for reciprocating engines,
- wherein an incipient crack (8) is produced by pulsed radiant energy, e.g. an electron beam or a laser beam, or controlled triggering of a fracture, wherein
- a line of funnel-shaped recesses (11) starting from the surface (9) of the component and separated by webs (10) are produced by melting, evaporation and/or blowing out by an advance motion chosen relative to the respective radiation effect along at least parts of one side of the fracture plane (6), wherein
- the funnel-shaped blind-bore recesses (11) adjoin one another on the surface of the component,
**characterised in that**
- the component is made of ductile carbon steel having a carbon content C ≈ 0.5 to 0.85% and
- webs (10) having a weakened cross-section are formed on the free end portions near the surface of the component by blending neighbouring funnel-shaped recesses (11) between web peaks (16) with zones (15) overlapping at an acute angle,
- the zones being embrittled to glass hardness by uniform individual quenching at least over the cross-section of the peaks, by a temperature-dependent structural conversion to martensite (12) in order to form first starting cracks (13) for initiating the fracture, wherein
- the glass-hard embrittled web peaks (16) are left recessed relative to the surface (9) of the component.

2. A method according to claim 1, **characterised in that** the recesses (11) are made additionally brittle in the base between the webs (10), at least in the neighbourhood of the fracture plane (6).

3. A method according to claim 1 and 2, **characterised in that** the embrittlement of webs (10) and/or recesses (11) is obtained by incorporation of a gas flow in the respective structure (hydrogen or nitrogen embrittlement).

4. A method according to any of claims 1 to 3, **characterised in that**
- the recesses (11) are generated by a laser using a laser means wherein the radiant energy is distributed over the cross-section of the pulsed laser beam in accordance with a Gaussian distribution curve, wherein
- if required the embrittled web peaks (16) are recessed relative to the surface (9) of the component by an air or oxygen stream for blowing out and/or burning up the material melted in the recesses (11).

5. A method according to any of claims 1 to 4, **characterised in that** the recesses (11) have a width of about 0.4 mm and a depth between about 0.4 and 0.9 mm in the direction in which they are arranged in lines, the cross-section being arbitrary.

6. A method of producing a component according to one or more of claims 1 to 5,
- comprising incipient cracks (8) diametrically disposed in a bearing bore (7),
**characterised in that**
- the incipient cracks (8) are disposed in a component in the form of a connecting rod (1) or machine bearing before the final precision machining of the respective bearing bore (7), and
- the bearing cover (5) is given a flexibility between screw holes (4) such that
- elastic deformation for producing starting cracks in the webs (10) and/or recesses (11) can be made by a breaking mandrel having a diameter smaller by 0.05 to 0.15 mm than the previously-machined bearing bore (7).

## Revendications

1. Procédé pour développer un point d'amorçage de rupture pour la séparation par rupture d'une pièce, notamment d'une bielle de moteur à combustion interne, selon lequel
- pour déclencher de manière précise la rupture, on réalise un point d'amorçage de rupture (8) avec de l'énergie de rayonnement pulsée, par exemple un faisceau d'électrons ou un faisceau laser,
- à l'aide d'un mouvement d'avancement relatif, choisi, par rapport à l'action respective du rayonnement, au moins par segment le long d'un côté du plan de séparation par rupture (6) en partant de la surface supérieure (9) de la pièce, on réalise par fusion, évaporation et/ou éjection par soufflage, des cavités (11) en forme de trous borgnes, en entonnoirs, placées les unes derrière les autres suivant une ligne et séparées les unes des autres par des entretoises (10),
- les cavités (11) en forme de trous borgnes, en entonnoirs, sont adjacentes les unes aux autres à proximité de la surface de la pièce,
**caractérisé en ce que**
- la pièce est en un matériau ductile, d'acier au carbone avec une teneur en carbone C à peu près égale à 0,5-0,85 % et,
- au niveau des entretoises (10), libres, de sections affaiblies, des extrémités proches de la surface de la pièce, on forme des pointes d'entretoises (16) par recoupement des cavités (11) voisines, en forme d'entonnoir, ces entretoises en forme de pointes ayant des zones (15) qui se chevauchent avec un angle aigu,
- ces zones sont fragilisées par trempe propre leur donnant la dureté du verre, par une transformation du réseau en fonction de la température donnant de la Martensite (12), au moins de façon continue jusqu'à la section de la pointe, pour former des premières fissures de démarrage (13) amorçant la séparation par rupture,
- les pointes d'entretoises (16) cassantes comme du verre restant enfoncées par rapport à la surface 9 de la pièce.

2. Procédé pour développer un point d'amorçage de rupture selon la revendication 1,
**caractérisé en ce que**
les cavités (11) sont rendues en plus cassantes au moins au niveau du plan de séparation de rupture (6), dans chaque fond entre les entretoises (10).

3. Procédé pour développer un point d'amorçage de rupture selon les revendications 1 et 2,
**caractérisé en ce que**
les entretoises (10) et/ou les cavités (11) sont rendues cassantes par des apports aux réseaux respectifs provenant de la veine de gaz (fragilisation par hydrogène ou azote).

4. Procédé pour développer un point d'amorçage de rupture selon l'une des revendications 1 à 3,
**caractérisé en ce qu'**
- on réalise les cavités (11) avec un laser, une installation de laser dont le faisceau laser pulsé a une répartition d'énergie dans sa section correspondant à la courbe de distribution de Gauss,
- le cas échéant, on réalise les points d'entretoises (16) cassantes par rapport à la surface (9) de la pièce en soufflant et/ou en brûlant la matière fondue dans les cavités (11), en profondeur avec un jet d'air ou d'oxygène.

5. Procédé pour développer un point d'amorçage de rupture selon l'une des revendications 1 à 4,
**caractérisé en ce que**
les cavités (11) présentent dans la direction de leur alignement une section quelconque avec une largeur d'environ 0,4 mm et une profondeur comprise entre 0,4 et 0,9 mm.

6. Procédé de fabrication d'une pièce selon une ou plusieurs des revendications 1 à 5,
comportant des points d'amorçage de rupture (8) diamétralement disposés dans le perçage de palier (7),
**caractérisé en ce que**
- les points d'amorçage de rupture (8) sont réalisés avant l'usinage fin de finition du perçage de palier (7) respectif dans une pièce en forme de bielle (1) ou de palier de moteur,
- le chapeau de palier (5) respectif est élastique en flexion entre les pipes de vissage (4) pour
- qu'avec une broche de rupture d'un diamètre réduit de 0,05 à 0,15 mm par rapport au perçage de palier (7), préparé, on produit une déformation élastique servant à former des fissures de démarrage dans les entretoises (10) et/ou dans les cavités (11).
